# EUROPÄISCHE PATENTANMELDUNG

(11) **EP 1 600 833 A2**
(43) Veröffentlichungstag der Anmeldung: **30.11.2005**
(21) Anmeldenummer: 05010225.0
(22) Anmeldetag: 11.05.2005
(51) Int. Cl.: G05B 19/406, B25J 9/16, B25J 9/22

(54) **Verfahren und Vorrichtung zum Betreiben einer Maschine, wie eines Mehrachs-Industrieroboters**

(30) Priorität: 28.05.2004 DE 102004026185
(71) Anmelder: KUKA Roboter GmbH, 86165 Augsburg (DE)
(72) Erfinder: Bischoff, Rainer, 86163 Augsburg (DE); Bunsendal, Jens, 86153 Augsburg (DE); Hietmann, Gerhard, 86405 Herbertshofen (DE)
(74) Vertreter: Lempert, Jost

(57) **Zusammenfassung**

Um die Sicherheit einer Maschine, insbesondere eines Roboters, wie eines Mehrachs-Industrieroboters in dessen Betrieb, insbesondere beim Betrieb in Anwesenheit von Menschen, zu verbessern, sieht die Erfindung ein Verfahren zum Betreiben der Maschine vor, welches dadurch gekennzeichnet ist, dass zumindest ein Bahnabschnitt überwacht in einer Referenzfahrt durchfahren wird, dass bewegungscharakteristische Betriebswerte kontinuierlich gemessen und als Referenzwerte gespeichert werden und dass im Betrieb der Maschine ebenfalls diese Betriebswerte erfasst und mit den gespeicherten Referenzwerten verglichen werden. Die Erfindung beinhaltet auch eine Vorrichtung zur Durchführung des Verfahrens.

## Beschreibung

Die Erfindung betrifft ein Verfahren und eine Vorrichtung zum Betreiben einer Maschine, wie eines Roboters, insbesondere eines Mehrachs-Industrieroboters.

Roboter werden in verstärktem Maße in Kooperation mit Menschen eingesetzt, beispielsweise in Forschungsverbundvorhaben, im Bereich der Medizin sowie im Entertainmentbereich, bei dem Roboter mit Einrichtungen zur Aufnahme von Personen versehen sind, um diese in der Luft herumzubewegen.

In allen diesen Fällen wird eine erhöhte Sicherheit des Betriebs des Roboters verlangt.

Zur Überwachung eines Roboters sind verschiedene Verfahren und Vorrichtungen bekannt. Problematisch ist bei bekannten Verfahren jedoch, dass bestimmte Fehler, die auf physikalischen Änderungen des Robotersystems beruhen, nicht erkannt werden können. Zu den Ursachen solcher Änderungen gehören beispielsweise Alterungserscheinungen oder das Abknicken oder Brechen von Strukturelementen, Getrieben oder Antriebswellen. Auch kann mit einem robotereigenen Messsystem nicht detektiert werden, ob die am Roboter angeflanschten Werkzeuge oder Personengondeln noch korrekt mit dem Roboter verbunden sind.

Weiterhin ist problematisch, dass ein Robotersystem nicht ohne weiteres erkennen kann, ob an einem Programmabschnitt - in unberechtigter Weise oder aus Unachtsamkeit - Änderungen vorgenommen worden sind. Sicherheitskritische Anlagen müssen stillgesetzt werden, wenn eine softwaretechnische Änderung nicht von einem zuständigen Mitarbeiter von einer Prüfanstalt abgenommen wurde, insbesondere also, wenn solche Änderungen unberechtigterweise erfolgt sind. Ein Schutz auf Dateiebene reicht nicht aus, da dieser Schutz unter Umständen von Mitarbeitern leicht umgangen werden kann.

Bahnplanungsfehler, die während des Betriebs auftreten, können ebenfalls nicht mit heutigen Methoden erkannt werden. Zumeist ist nur die Positionserfassung redundant ausgelegt, nicht aber die Bahnplanung. Ein Maschinen- oder Robotersystem, das nur die anliegenden Positionen sicher überwacht, kann also nicht wissen, ob die anliegenden Positionen von der Steuerung überhaupt richtig geplant wurden.

Aus mehreren Robotern bestehende Anlagen müssen aus einem beliebig eingenommenen Haltezustand (wieder) sicher in Betrieb genommen werden können. Ein beliebiger (nicht programmgesteuerter Anlagenzustand) kann beispielsweise durch einen Notstop oder Stromausfall verursacht worden sein. Da nicht ausgeschlossen werden kann, dass in einem beliebigen Anlagenzustand Personen gefährdet werden können (insbesondere bei länger dauerndem Anhalten dieses Zustandes), müssen besondere Maßnahmen getroffen werden, um diesen ungewollten Anlagenzustand schnellstmöglich zu beheben.

Bekannt ist, einem Stromausfall durch unterbrechungsfreie Stromversorgungen vorzubeugen.

Der Erfindung liegt die Aufgabe zugrunde, die Sicherheit der beweglichen Elemente einer Maschine, insbesondere eines Roboters, wie eines Industrieroboters zu erhöhen.

Erfindungsgemäß wird die genannte Aufgabe bei einem Verfahren der eingangs genannten Art dadurch gelöst, dass zumindest ein Bahnabschnitt überwacht in einer Referenzfahrt durchfahren wird, dass bewegungscharakteristische Betriebswerte kontinuierlich gemessen und als Referenzwerte gespeichert werden und dass im Betrieb der Maschine ebenfalls Betriebswerte erfasst und mit den gespeicherten Referenzwerten verglichen werden. Zur Lösung der genannten Aufgabe ist eine erfindungsgemäße Vorrichtung versehen mit Sensoren zur Erfassung bewegungscharakteristischer Betriebswerte beweglicher Teile der Maschine, insbesondere des Industrieroboters, mit einer Einrichtung zur Durchführung einer überwachten Referenzfahrt unter Messung bewegungscharakteristischer Referenzwerte, mit einer Speichereinrichtung zum Abspeichern der bei der Referenzfahrt gemessenen Referenzwerte, und mit einer Vergleichseinheit zum Vergleichen im Betrieb der Maschine erfasster bewegungscharakteristischer Betriebswerte mit dementsprechend gespeicherten Referenzwerten.

Bewegungscharakteristische Referenz- und Betriebswerte sind die Bewegung charakterisierende Werte, wobei eine Bewegung eines Punktes oder Körpers durch die Orte an den entsprechenden bestimmten Zeitpunkten und die eben durch die Zeitpunkte selbst bestimmt ist und durch diese Werte auch die Geschwindigkeit zwischen zwei Orten und gegebenenfalls auftretende Beschleunigungen jeweils nach Größe und Richtung gegeben sind.

Durch die Erfindung wird so erreicht, die Bewegungskontur und den Bewegungsablauf an einer Maschine, wie eines Roboters, bzw. eines angeflanschten Werkzeugs sicher überwachen zu können. Die Sicherheit bezieht sich auf unerwünschte physikalische Änderungen am Robotersystem, wie Fehler der Sensorik, der Aktuatorik oder Strukturelementen (z.B. Kabelbruch von Sensoren, Abknicken oder Brechen von Strukturelementen, Getrieben- oder Antriebswellen) und unerwünschte Eingriffe in ein Roboterprogramm, wie durch Manipulation von Daten und Programmen, aber auch Softwarefehler (z.B. während des Betriebs auftretender Bahnplanungsfehler) oder andere Fehler, welche die Bewegungsausführung beeinflussen. Die erfindungsgemäße Lösung ist einfach und preiswert realisierbar und eignet sich bei den verschiedenen eingangs genannten Arbeitsbedingungen eines Roboters, insbesondere dann, wenn die abzufahrende Bahn nur selten geändert wird und keine Präzision im Sub-Millimeterbereich gefordert ist.

Die Erfindung ermöglicht es insbesondere, Roboter in Bereichen einzusetzen, in denen ihr Einsatz aus Sicherheits- und Kostengründen bisher nicht möglich war.

Bei einer Referenzfahrt werden die relevanten Referenzwerte aufgezeichnet. Die Aufzeichnung der Referenzwerte kann unter normalen Betriebsbedingungen erfolgen. Die Referenzwerte können durch geeignete Filter geglättet werden. Auch kann vorgesehen sein, über mehrere Referenzfahrten zu mitteln bzw. diese zu vergleichen, um zufällige Ereignisse während der Referenzfahrten erkennen und ausschließen zu können. Auch können verschiedene Referenzfahrten in Abhängigkeit von bestimmten Programmparametern (z.B. Programmvariablen) oder Umweltparametern (z.B. Temperatur, Gewicht und Trägheitstensor eines angeflanschten Werkzeugs) aufgezeichnet werden. Die so parametrierten Referenzfahrten werden auf der jeweiligen Robotersteuerung oder aber auf einer externen Steuerung gespeichert und stehen dann während des Betriebs für den Vergleich mit aktuellen Werten zur Verfügung. Ebenfalls ist vorgesehen, bestimmte Bewegungsstellen markieren zu können, um bei diesen z.B. keine oder eine besondere Vergleichs- und Überwachungsstrategie ausführen zu können. Dies ist z.B. erforderlich, wenn der vom Roboter auszuführende Prozess einen Kontakt des Roboterwerkzeuges mit einem Bauteil erfordert (wie z.B. beim Punktschweißen, bei dem die Schweißzange Kontakt mit einem Blechteil oder einer Autokarosserie aufnimmt). In diesen Fällen kann es sein, dass die Referenzsignale keine reproduzierbaren und damit überwachbaren Informationen liefern.

Während bei Feststellung von Abweichungen zwischen Referenzwerten und Betriebswerten geeignete Handlungen oder Aktionen vorgenommen werden können, ist in bevorzugter Ausgestaltung der Erfindung vorgesehen, dass bei der Feststellung von Abweichungen zwischen Referenz- und Betriebswerten die Maschine angehalten wird.

Die Abweichung der Betriebsbahn bzw. von Betriebswerten gegenüber einer Referenzbahn oder deren Referenzwerten kann in bevorzugter Weise dadurch erfolgen, dass der Vergleich zwischen Betriebs- und Referenzwerten durch Differenzbildung durchgeführt wird oder aber dadurch, dass der Vergleich zwischen Betriebs- und Referenzwerten mittels Bestimmung von Korrelationen durchgeführt wird, wodurch die Ähnlichkeit der aufgenommenen Messwertverläufe mit den gespeicherten Referenzwertverläufen festgestellt werden können. Die bei der Messung erfolgte Parametrierung des Kenngrößenraums kann während des Vergleichs ausgenutzt werden, um z.B. den Einfluss von Temperatur oder Gewichtsunterschieden abzufangen.

In weiterer bevorzugter Ausgestaltung ist vorgesehen, dass der vergleich zwischen Referenz- und Betriebswerten unter Berücksichtigung von Toleranzen durchgeführt wird, wobei vorzugsweise die Referenzbahn bzw. deren Werte mit einem Toleranzband versehen werden und festgestellt wird, ob die Betriebsbahn bzw. die Betriebswerte in dieses Toleranzband fallen.

Befindet sich der Ursprung der Maschine, wie beispielsweise der Sockel eines Roboters selbst in Bewegung, beispielsweise auf einer mittels Schienen geführten Bahnbewegung, so ist erfindungsgemäß vorgesehen, dass bei einer Bewegung des Sockels eines Roboters im Raum bei der Bestimmung der Betriebswerte die Bahnbewegung des Robotersockels berücksichtigt wird. Hierdurch können Maschinen bzw. Roboter mit beweglicher Basis sicherer gemacht werden. Die Berücksichtigung der Basisbewegung erfolgt beispielsweise dadurch, dass deren Beschleunigungswerte separat gemessen und von denen der Maschinen- bzw. Roboterteile, wie Roboterarmen, abgezogen werden, bevor die Werte der aktuellen Bewegung mit den Referenzwerten verglichen werden.

Um den erstmaligen Anlauf der Maschine bzw. des Roboters, beispielsweise zu Beginn eines neuen Betriebstages oder zu Beginn eines Personentransports, automatisch und sicher überwacht durchführen zu können, ist erfindungsgemäß vorgesehen, dass zunächst eine Referenzposition im Raum angefahren wird. Es muss sichergestellt werden, dass die Referenzposition im Raum tatsächlich angefahren wird, z.B. durch einen Schalter, Lichtschranken und ähnliche absolute Positionen überwachende Vorrichtungen. Dadurch wird sichergestellt, dass bei Aufzeichnung und Vergleich von ortsrelativen Messgrößen (z.B. Beschleunigungswerten) zumindest einmal eine absolut bekannte Position angefahren wurde und damit ein durch beispielsweise verbogene Strukturelemente hervorgerufener Versatz sicher erkannt werden kann.

In bevorzugter Ausgestaltung der Erfindung befindet sich diese Referenzposition in fester Relation zum Roboter, z.B. am Roboterfuß. Dadurch ist gewährleistet, dass der Referenzpunkt immer angefahren werden kann, auch wenn der Roboter selbst auf einem beweglichen Sockel montiert sein sollte.

In weiter bevorzugter Ausgestaltung ist vorgesehen, dass, sobald der Roboter die Referenzposition erreicht hat, eine spezielle Testbewegung durchgeführt wird, die wieder an der Referenzposition enden kann. Während dieser Testbewegung werden zuvor bei der gleichen Testbewegung aufgezeichnete Referenz mit den jetzt gemessenen Betriebswerten verglichen. Die Testbewegung kann dazu verwendet werden, bestimmte Betriebsparameter so genau wie möglich zu ermitteln (z.B. Lastparameter), um diese beim eigentlichen Betrieb zur Parametrierung der Messwerte nutzen zu können. Erst wenn diese Testbewegung erfolgreich verlaufen ist, wird mit dem eigentlichen Betrieb, der im Sinne dieser Erfindung ebenfalls überwacht ist, begonnen. Dabei kann das eigentlich auszuführende Programm automatisch gestartet werden.

In weiter bevorzugter Ausgestaltung der Erfindung kann vorgesehen sein, dass ein kontrollierter Vergleichslauf durchgeführt wird. Die beweglichen Teile der Maschine bzw. insbesondere des Roboters können dabei manuell gesteuert oder aber kontrolliert systemgesteuert auf die richtigere Bahn gebracht werden. Anschließend erfolgt gegebenenfalls der vorstehend erläuterte Testlauf bzw. eine überwachte Weiterführung der Programmausführung. Erst wenn die erfindungsgemäße Sicherheitslogik festgestellt hat, dass sich der Roboter wieder im Sinne der aufgezeichneten Referenz-Bahn bewegt, kann in den Automatikmodus gewechselt werden. Dieser Wechsel erfolgt vorzugsweise unterbrechungsfrei, damit die Überwachung nicht aufgrund des Betriebsmoduswechsels wieder anspricht. Dass wieder in den automatischen Betrieb gewechselt werden kann, wird beim Bediener vorzugsweise mittels eines Signals, wie eines optischen oder akustischen Signals, angezeigt. Der eigentliche Wechsel in den Betriebsmodus erfolgt vorzugsweise auf eine Benutzeraktion hin.

Zur Bestimmung der Referenz- und Betriebsmesswerte können sowohl roboterinterne als auch roboterexterne Sensoren sowie roboterinterne als auch roboterexterne Recheneinheiten zum Einsatz kommen. Grundsätzlich ist es möglich, einen physikalischen Messwert zu erfassen und zu vergleichen. In bevorzugter Ausgestaltung werden aber verschiedene, insbesondere sich ergänzende Messgrößen erfasst und miteinander verglichen. In bevorzugter Ausgestaltung kann dabei vorgesehen sein, dass charakteristische Bewegungsgrößen der Maschine, insbesondere des Roboters, mittels Positionsencodern, Lasertriangulation, Lasertrackern, 3D-Bildverarbeitung und/oder Initialsensoren erfasst werden. Beschleunigungssensoren und Gyroskope können beispielsweise an einem Werkzeug oder an einer Gondel am Roboterflansch angebracht sein.

Die genannten Messsysteme Lasertriangulation, auch als Hallen-GPS bezeichnet, Lasertracker oder 3D-Bildverarbeitung arbeiten mit an den Roboter angebrachten aktiven oder passiven Marken und verfolgen diese, wodurch sie auf Messgrößen, wie kartesische Position, Geschwindigkeit und Beschleunigung des entsprechenden Roboter- oder Maschinenelements schließen können.

Aus Messwerten und Wissen über kinematische Transformationen werden in einer besonderen Ausprägung der Erfindung verschiedene Messwerte so aufbereitet, dass sie mit anderen Messwerten verglichen werden können. Beispielsweise können aus Lage-Istwerten durch Differentiation Geschwindigkeiten berechnet werden. Aus Lage-Istwerten der Achsen kann durch Transformation auf die kartesische Position des Flansches und durch dessen zweifache Differentiation auf dessen Beschleunigung geschlossen werden.

Auch wenn grundsätzlich einer der genannten Messwerte bereits ausreichen würde, fehlerhaftes Anlagenverhalten zu erkennen, so können redundante Sensoren angewendet werden. Auch ist es vorteilhaft, unterschiedliche Arten von Sensoren (verschiedene Messprinzipien) anzuwenden und damit für eine Redundanz zu sorgen.

Ähnliche Aussagen über Veränderungen der Bewegungskontur und der Maschinenstruktur (z.B. Strukturbruch, verbogenes Werkzeug) lassen sich auch bei der Verwendung von z.B. Strömen als Referenz- und Vergleichsgröße gewinnen. Der Strom, der zur Bewegung einer Maschine erforderlich ist, ist definiert von allen, die Dynamik beeinflussenden Größen, wie Achsstellungen, Geschwindigkeiten, Beschleunigungen, Massen, Schwerpunkte und Trägheiten der bewegten Maschinenteile und angebauter Werkzeuge, Gravitations-, Zentrifugal und Corioliskräfte oder dergleichen. Damit stellen die gemessenen Achsströme einer Maschine, wie externe Sensorsignale eine aussagekräftige Überwachungsgröße dar. Ist ein Roboter als solcher frei im Raum beweglich, ist erfindungsgemäß vorgesehen, diese Bewegung unabhängig von der Roboterbewegung zu erfassen und zu überwachen.

Ein weiteres wesentliches Element der Erfindung ist die Referenzfahrt, die z.B. mit gedrückter Zustimmtaste im Testbetrieb erfolgen kann und bei dem die relevanten Messwerte aufgezeichnet werden.

Weitere Vorteile und Merkmale der Erfindung ergeben sich aus den Ansprüchen und aus der nachfolgenden Beschreibung, in der die Erfindung beispielhaft anhand der Zeichnungen erläutert ist. Dabei zeigt:
- Fig. 1: einen Roboter mit Werkzeug und externem Sensor;
- Fig. 2: einen Vergleich von Betriebs- und Referenzkurve einer charakteristischen Messgröße;
- Fig. 3: ein Blockdiagramm zur Aufzeichnung von bewegungscharakteristischen Referenzwerten; und
- Fig. 4: ein Blockdiagramm einer Vergleichseinheit.

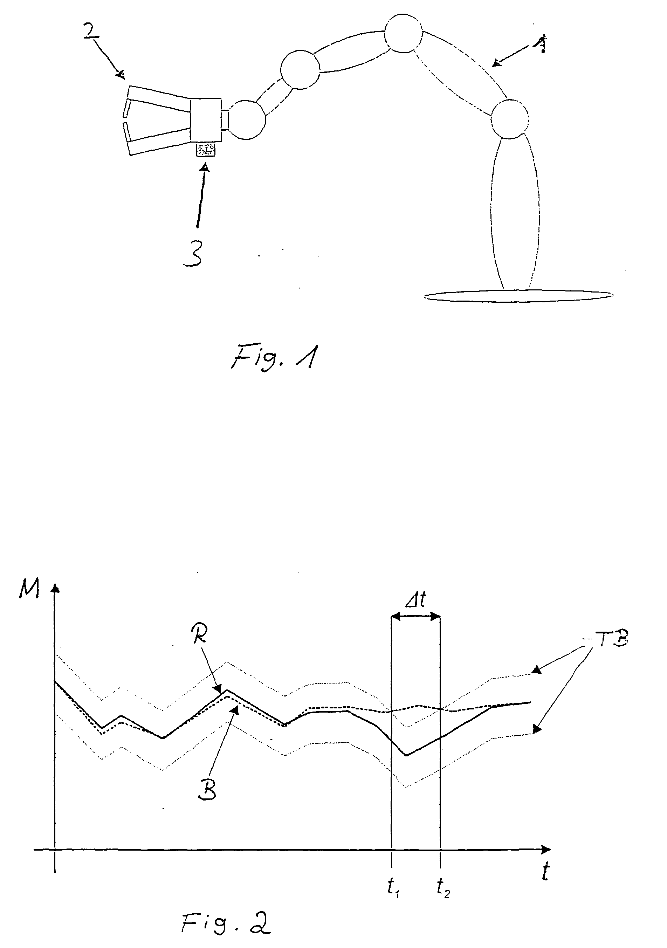

In Fig. 1 ist ein Roboter 1 mit einem angeflanschten Werkzeug 2 dargestellt. Statt eines Werkzeugs im eigentlichen Sinne könnte es sich auch um eine Personengondel - wie bei einem bekannten auf einem Roboter basierenden Fahr- oder Vergnügungsgerät - handeln. Ein externer Sensor 3 (z.B. Inertialsensor) ist am Werkzeug 2 an beliebiger Stelle in beliebiger Orientierung angebracht. Er liefert bewegungscharakteristische Messwerte sowohl während einer Referenzfahrt als auch während des Betriebs. Genauso können Inertialsensoren an allen Strukturelementen des Roboters angebracht sein, um die Werte der roboterinternen Positionsencoder mit einem anderen (inertialen) Messprinzip überwachen zu können. Gleichfalls können interne Strom- oder Momentenmesser aussagekräftige Signale für die Überwachung der Bahnkurve des Roboters bzw. angeflanschter Werkzeuge liefern.

In Fig. 2 ist der Wert einer charakteristischen Messgröße M über die Zeit t aufgetragen (Referenzkurve R = durchgezogene Linie). Darüber gelegt ist die Betriebskurve B (gestrichelte Linie). Sie weicht von der Referenzkurve R ab und durchbricht ein noch akzeptables Toleranzband TB zum Zeitpunkt t₁ und kehrt zum Zeitpunkt t₂ in die Grenzen des Toleranzbandes zurück. In Abhängigkeit von der Art des Messwertes können unterschiedliche Toleranzbänder TB definiert werden und auch Zeitdifferenzen Δt festgelegt werden, innerhalb derer ein Überschreiten des Toleranzbandes TB noch akzeptiert wird. Der Roboter wird stillgesetzt, wenn die Betriebskurve B länger als eine maximal zulässige Zeit Δt > tₘₐₓ außerhalb des Toleranzbandes TB verläuft. Bei tₘₐₓ = 0 würde der Roboter zum Zeitpunkt t₁ stillgesetzt.

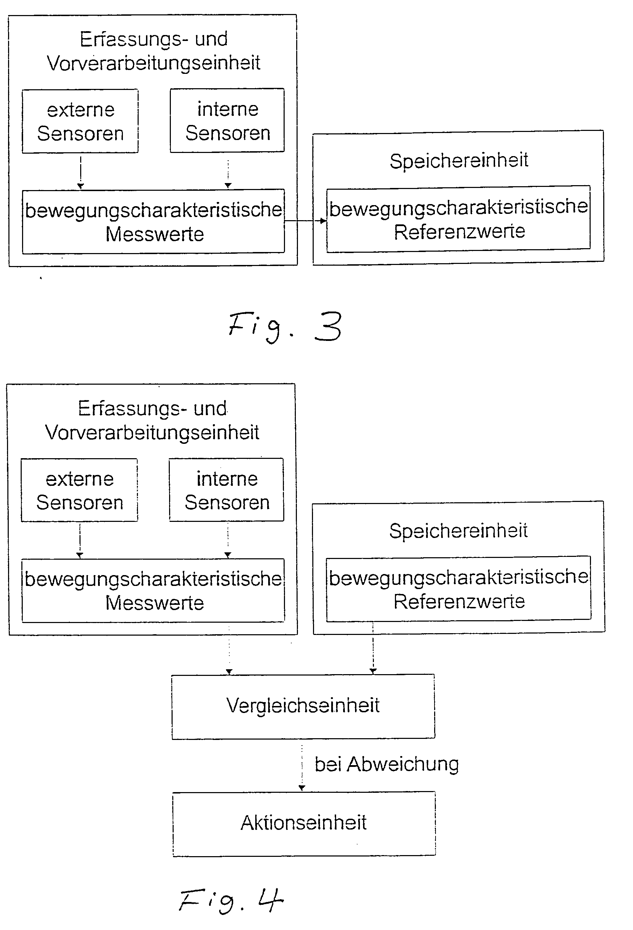

Die Fig. 3 zeigt ein Blockdiagramm zur Aufzeichnung von bewegungscharakteristischen Referenzwerten mittels externen und internen Sensoren. Die Messwerte sind durch Filterung und Mittelwertbildung über mehrere Referenzfahrten oder Transformationen der Messgrößen bewegungscharakteristischer Messwerte vorverarbeitet.

Die Fig. 4 zeigt ein Blockschaltbild einer Vergleichseinheit, durch die der Vergleich der bewegungscharakteristischen Referenzwerte mit erfassten und vorverarbeiteten Betriebswerten erfolgt. Bei festgestellten Abweichungen (z.B. über Differenzbildung oder Korrelation oder dem in Fig. 2 gezeigten Verfahren) wird eine Aktion von der Aktionseinheit ausgelöst, z.B. ein Stopp des Roboters.

## Patentansprüche

1. Verfahren zum Betreiben einer Maschine, wie insbesondere eines Mehrachs-Industrieroboters, **dadurch gekennzeichnet, dass** zumindest ein Bahnabschnitt überwacht in einer Referenzfahrt durchfahren wird, dass bewegungscharakteristische Betriebswerte kontinuierlich gemessen und als Referenzwerte gespeichert werden und dass im Betrieb der Maschine ebenfalls diese Betriebswerte erfasst und mit den gespeicherten Referenzwerten verglichen werden.

2. Verfahren nach Anspruch 1, **dadurch gekennzeichnet, dass** bei Feststellung von Abweichungen zwischen Referenz- und Betriebswerten die Maschine angehalten wird.

3. Verfahren nach Anspruch 1 oder 2, **dadurch gekennzeichnet, dass** der Vergleich zwischen Betriebs- und Referenzwerten durch Differenzbildung durchgeführt wird.

4. Verfahren nach Anspruch 1 oder 2, **dadurch gekennzeichnet, dass** der Vergleich zwischen Betriebs- und Referenzwerten mittels Bestimmung von Korrelationen durchgeführt wird.

5. Verfahren nach einem der vorangehenden Ansprüche, **dadurch gekennzeichnet, dass** der Vergleich zwischen Referenz- und Betriebswerten an bestimmten Stellen während der Programmausführung unterbleiben kann. Dies ist für die Fälle wichtig, in denen äußere Einflüsse die Messsignale zufällig verfälschen könnten und man dann eben nicht anhalten möchte, z.B. bei gewolltem Kontakt zwischen Roboterwerkzeug und Werkstück (wie beim Punktschweißen).

6. Verfahren nach einem der vorangehenden Ansprüche, **dadurch gekennzeichnet, dass** der Vergleich zwischen Referenz- und Betriebswerten unter Berücksichtigung von Toleranzen durchgeführt wird.

7. Verfahren nach einem der vorangehenden Ansprüche, **dadurch gekennzeichnet, dass** bei einer Bewegung des Sokkels eines Roboters im Raum bei der Bestimmung der Betriebswerte die Bahnbewegung des Robotersockels berücksichtigt wird.

8. Verfahren nach einem der vorangehenden Ansprüche, **dadurch gekennzeichnet, dass** beim Anfahren zunächst eine Referenzposition im Raum angefahren wird.

9. Verfahren nach Anspruch 8, **dadurch gekennzeichnet, dass** das Anfahren der Referenzposition durch eine externe, die absolute Position überwachende Sensorik sichergestellt wird..

10. Verfahren nach Anspruch 7 oder 8, **dadurch gekennzeichnet, dass** beim Anfahren eine Testbewegung durchgeführt wird, bei der Betriebs- und Referenzwerte miteinander verglichen werden.

11. Verfahren nach einem der vorangehenden Ansprüche, **dadurch gekennzeichnet, dass** nach dem Anhalten der Maschine zum erneuten Anlauf diese zunächst kontrolliert auf die vorgesehene Bahn gebracht wird.

12. Verfahren nach Anspruch 11, **dadurch gekennzeichnet, dass** ein kontrollierter Vergleichslauf durchgeführt wird.

13. Verfahren nach Anspruch 12, **dadurch gekennzeichnet, dass** für den kontrollierten Vergleichslauf die Zustimmtaste betätigt werden muss.

14. Verfahren nach einem der vorangehenden Ansprüche, **dadurch gekennzeichnet, dass** während des Referenz- und Betriebsablaufs an beweglichen Teilen der Maschine, insbesondere des Roboters, bzw. mit diesen Teilen verbundenen Werkzeugen charakteristische Messgrößen, wie kartesische Position, Achsstellung, Orientierung, Geschwindigkeit, Beschleunigung, Antriebsstrom und/oder Momente erfasst werden.

15. Verfahren nach einem der vorangehenden Ansprüche, **dadurch gekennzeichnet, dass** charakteristische Bewegungsgrößen der Maschine, insbesondere des Roboters, mittels Positionsencodern, Lasertriangulation, Lasertrackern, Strommessern, Momentensensorik, 3D-Bildverarbeitung und/oder Initialsensoren erfasst werden.

16. Vorrichtung zum Betreiben einer Maschine, insbesondere eines Mehrachs-Industrieroboters, mit Sensoren zur Erfassung bewegungscharakteristischer Betriebswerte beweglicher Teile der Maschine, insbesondere des Industrieroboters, mit einer Einrichtung zur Durchführung einer überwachten Referenzfahrt unter Messung bewegungscharakteristischer Referenzwerte, mit einer Speichereinrichtung zum Abspeichern der bei der Referenzfahrt gemessenen Referenzwerte, und mit einer Vergleichseinheit zum Vergleichen im Betrieb der Maschine erfasster bewegungscharakteristischer Betriebswerte mit dementsprechend gespeicherten Referenzwerten.

17. Vorrichtung nach Anspruch 16, **gekennzeichnet durch** eine Abschalteinrichtung zum Abschalten des Roboters bei unzulässigen Abweichungen der Betriebswerte von den Referenzwerten.
